# EUROPEAN PATENT SPECIFICATION

(11) **EP 4 173 894 B1**
(45) Date of publication and mention of the grant of the patent: **30.04.2025**
(21) Application number: 22205055.1
(22) Date of filing: 02.11.2022
(51) Int. Cl.: B60R 11/00

(54) **A CONSOLE ASSEMBLY FOR A VEHICLE**
KONSOLENANORDNUNG FÜR EIN FAHRZEUG
ENSEMBLE CONSOLE POUR VÉHICULE

(30) Priority: 02.11.2021 IN 202121050211
(43) Date of publication of application: 03.05.2023
(73) Proprietor: Faurecia India Private Limited, Bhosari, Pune 411026 (IN)
(72) Inventor: SURYAWANSHI, Rushikesh, 416012 Kolhapur, Maharashtra (IN); VELTCHEV, Petko, Atsugi, Kanagawa 243-0014 (JP)
(74) Representative: Pfenning, Meinig & Partner mbB

(56) References cited:
- FR-A1- 2 902 711
- JP-A- 2017 065 325
- JP-U- H0 665 067
- JP-U- S58 140 833
- KR-A- 20180 042 633

## Description

### TECHNICAL FIELD

The present disclosure relates to the field of a console assembly for a vehicle. More particularly, the present disclosure relates to a console assembly with a sliding member which can slide in the desired position(s) as required by a user of the vehicle.

### BACKGROUND FOR THE INVENTION

Background description includes information that may be useful in understanding the present invention. It is not an admission that any of the information provided herein is prior art or relevant to the presently claimed invention, or that any publication specifically or implicitly referenced is prior art.

Console assembly is generally arranged between front seats in the interior of vehicles. A bottom part of the console assembly is configured over a floor of the vehicle interior in form of housing (bottom housing), which allows positioning of another part such as a storage unit, a storage unit with a lid or an armrest thereon. The existing storage unit, a storage unit with the lid or the armrest is/are slidable rearward and forward with respect to the housing or the bottom housing. For instance, gap(s) are created and required at bottom end/surface of the armrest when the armrest is moved forward or rearward, respectively, with respect to the housing. These gap(s) may help avoid any clash between the movable storage unit or armrest and the housing, however, it also leads to the accumulation of unwanted particulates such as dust and organisms within the storage unit, which significantly increases the maintenance requirements in the vehicle, and which may also lead to failure of the console assembly in long run.

There is, therefore, a need to overcome the above drawback, imitations, and shortcomings, and provide a simple, cost-effective, lightweight, compact, and efficient console assembly with a sliding member which can slide in the desired position(s) as required by a user of the vehicle to cover gap(s) provided in the console assembly. Document JP 2017 065325 A discloses a console assembly comprising a first member, a second member, the first and second member being slidable with respect to each other, wherein one or more bendable cover is attached to the first member or to the second member, and wherein the one or more bendable cover is arranged to at least partially close one or more gap created between a portion of the first member and a portion of second member. Further console assemblies with sliding members are known from KR 2018 0042633 A, JP S85 140833 U and JP H06 65067 U, wherein document KR 2018 0042633 A corresponds to the preamble of claim 1.

### OBJECTS OF THE PRESENT INVENTION

Some of the objectives of the present invention, which at least one embodiment herein satisfies are as listed herein below.

It is an object of the present invention to provide a console assembly where at least a part of the console slides in a desired position as required by a user of a vehicle.

It is an object of the present invention to provide a maintenance free console assembly that avoids dust accumulation.

It is an object of the present invention to provide an easy to operate console assembly.

It is an object of the present invention to provide a console assembly where at least a part of console assembly slides in desired position that operates semi-automatically or fully automatically.

It is an object of the present invention to provide a simple, efficient, and structurally aesthetic appealing console assembly arranged in between the front seat of the vehicle.

### SUMMARY OF THE PRESENT INVENTION

The present disclosure relates to the field of a console assembly for a vehicle. More particularly, the present disclosure relates to a console assembly with a sliding member which can slide in the desired position(s) as required by a user of the vehicle. The abovementioned objects are achieved by a console assembly according to claim 1.

An aspect of the present invention relates to console assembly for a vehicle in particular including a first member, a second member and one or more bendable member. The first member and/or second member are slidable with respect to each other. One or more bendable cover is attached to the first member or to the second member. Further, the one or more bendable cover is arranged to at least partially close one or more gap created between a portion of the first member and a portion of second member.

In an aspect, a set of two bendable covers comprising a first bendable cover, and a second bendable cover are arranged to at least partially close a first gap and a second gap, respectively, out of the one or more gap between the portion of the first member and the portion of the second member respectively.

In an aspect, a first end of the first bendable cover is fixedly connected to the first member and a second end is adapted to bend into an inner surface of the second member such that at least a portion of the bendable cover is not visible from outside as it bends into an inner surface of the first member.

In an aspect, a first end of the second bendable cover is fixedly connected to the second member and a second end is adapted to bend into an inner surface of the first member such that at least a portion of the second bendable cover is not visible from outside as it bends into an inner surface of the first member.

In an aspect, the inner surface of the second member includes two or more ribs adapted for guiding and bending the second end of the first bendable cover. More specifically, the two or more ribs are arranged on a curved inner surface of the second member, wherein a thickness of the two or more ribs gradually increases along its length from the lower end to the upper end of the curved inner surface. More specifically, the inner surface of the first member includes a rail adapted for guiding and bending the second end of the second bendable cover.

In an aspect, the first member is a housing arranged on a floor of the vehicle and the second member is a storage box and/or a lid/armrest.

In an aspect, the console assembly is arranged in between front seats of the vehicle. In another embodiment, the console assembly is arranged beside a driver seat (in place of the co-passenger).

According to the invention, the bendable cover is made up of a substantially rigid material for example Polyethylene, which bends upon application of external force and is able to regain its original shape after removal of the external force.

In an aspect, the bendable cover is a single strip made up of a substantially rigid material for example Polyethylene.

According to the invention, the bendable cover is oriented substantially horizontal when closing the gap between the portion of the first member and the portion of the second member. When the bendable cover bends into the first member or the second member, the bendable cover is oriented substantially parallel to the respective inner surface of the first member or the second member.

### BRIEF DESCRIPTION OF DRAWINGS

The accompanying drawings are included to provide a further understanding of the present disclosure, and are incorporated in and constitute a part of this specification. The drawings illustrate exemplary embodiments of the present disclosure and, together with the description, serve to explain the principles of the present disclosure. The diagrams are for illustration only, which thus is not a limitation of the present disclosure.

In the figures, similar components and/or features may have the same reference label. Further, various components of the same type may be distinguished by following the reference label with a second label that distinguishes among the similar components. If only the first reference label is used in the specification, the description is applicable to any one of the similar components having the same first reference label irrespective of the second reference label.
FIGs. 1A to 1C illustrate cross-sectional views of the proposed console assembly, in accordance with a first embodiment of the present disclosure.
FIG. 2 illustrates an exemplary view of the proposed console assembly, in accordance with a second embodiment of the present disclosure.
FIG. 3 illustrates an exemplary view of an inner surface of the first member configured with a rail adapted for allowing guiding and bending of a second end of the second bendable cover,
FIGs. 4 and 5 illustrate an exemplary view of an inner surface of the second member configured with ribs adapted for allowing guiding and bending of a first bendable cover member, in accordance with an embodiment of the present disclosure.

### DETAILED DESCRIPTION OF THE PRESENT INVENTION

The following is a detailed description of embodiments of the disclosure depicted in the accompanying drawings. The embodiments are in such detail as to clearly communicate the disclosure. However, the amount of detail offered is not intended to limit the anticipated variations of embodiments; on the contrary, the intention is to cover all modifications, equivalents, and alternatives falling within the spirit and scope of the present disclosure as defined by the appended claims.

In the following description, numerous specific details are set forth in order to provide a thorough understanding of embodiments of the present invention. It will be apparent to one skilled in the art that embodiments of the present invention may be practiced without some

Embodiments of the present disclosure relate to the field of a console assembly for a vehicle. More particularly, the present disclosure relates to a console assembly with a sliding member which can slide in the desired position(s) as required by a user of the vehicle to cover gaps provided in the console assembly.

According to an aspect, the present disclosure elaborates upon a console assembly for a vehicle. The assembly includes a first member, a second member, and one or more bendable cover. The first member and/or second member are slidable with respect to each other. The one or more bendable cover is attached to the first member or to the second member. The one or more bendable cover is arranged to at least partially close one or more gap between a portion of the first member and a portion of second member. The bendable cover is made up of a substantially rigid material for example Polyethylene, which bends upon application of external force and able to regain its original shape after removal of the external force. Preferably the bendable cover is a single strip made up of a substantially rigid material for example Polyethylene.

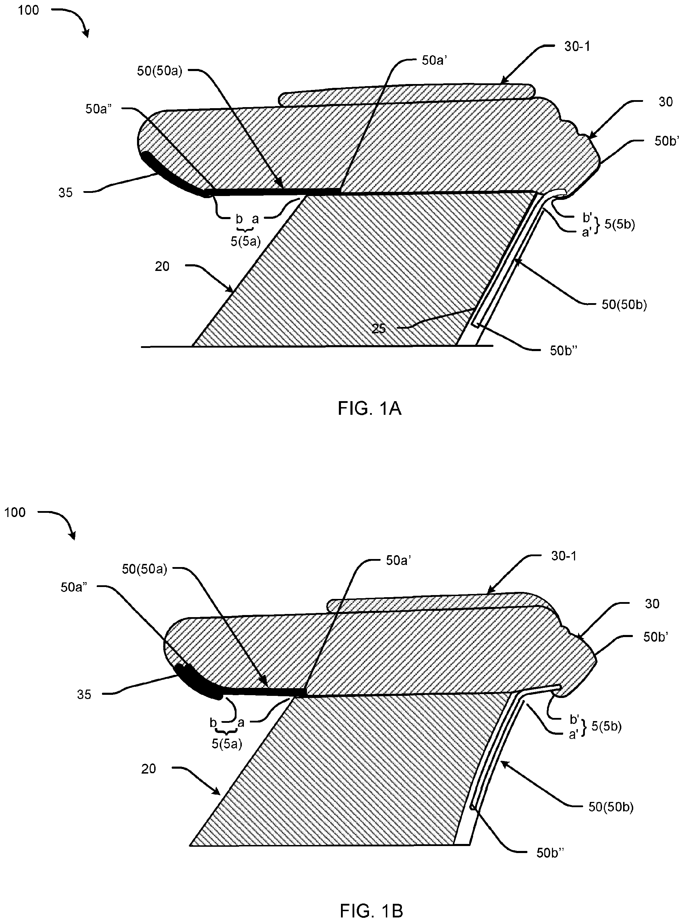

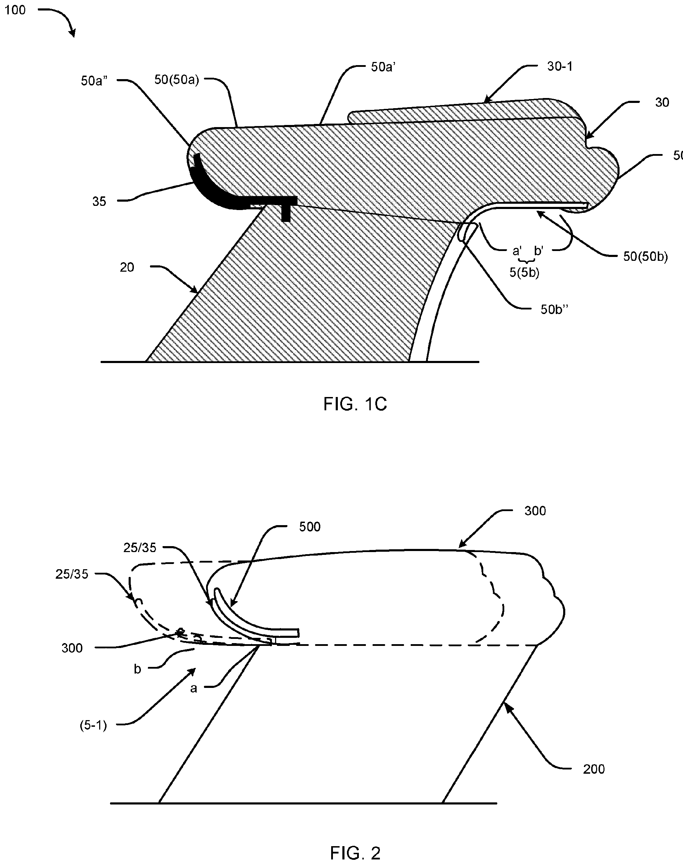

Referring to FIGs. 1A to 1C, according to a first embodiment, the console assembly (100) includes a first member (20), a second member (30), a first bendable cover (50a) and a second bendable cover (50b) is shown. The first member (20) and/or second member (30) are slidable with respect to each other. The sliding movement can be control manually or by an electric motor, but not limited to the likes. The first bendable cover (50a) is attached to the first member (20) and is arranged to at least partially close a first gap (5a) between a portion (a) of the first member (20) and a portion (b) of the second member (30), as shown in FIG. 1A. The second bendable cover (50b) is attached to the first member (20) and is arranged to at least partially close a second gap (5b) between a portion (a') of the first member (20) and a portion (b') of the second member (30). In the present embodiment, the length of the second member (30) is greater than the first member (20), when the first member (20) and/or second member (30) moves in a position where both the first and second gaps (5a, 5b) are closed by the first and the second bendable cover (50a, 50b) as shown in FIG. 1C.

The first and second bendable cover (50a, 50b) is made up of a substantially rigid material for example Polyethylene, which bends upon application of external force and is able to regain its original shape after removal of the external force.

More particularly, a first end (50a') of the first bendable cover (50a) is fixedly connected to the first member (20) and a second end (50a") is adapted to bend into an inner surface of the second member (30) such that at least a portion of the bendable cover (50) is not visible when viewed from outside. Similarly, a first end (50b') of the second bendable cover (50b) is fixedly connected to the second member (30) and a second end (50b") is adapted to bend into an inner surface of the first member (20) such that at least a portion of the second bendable cover (50b) is not visible when viewed from outside.

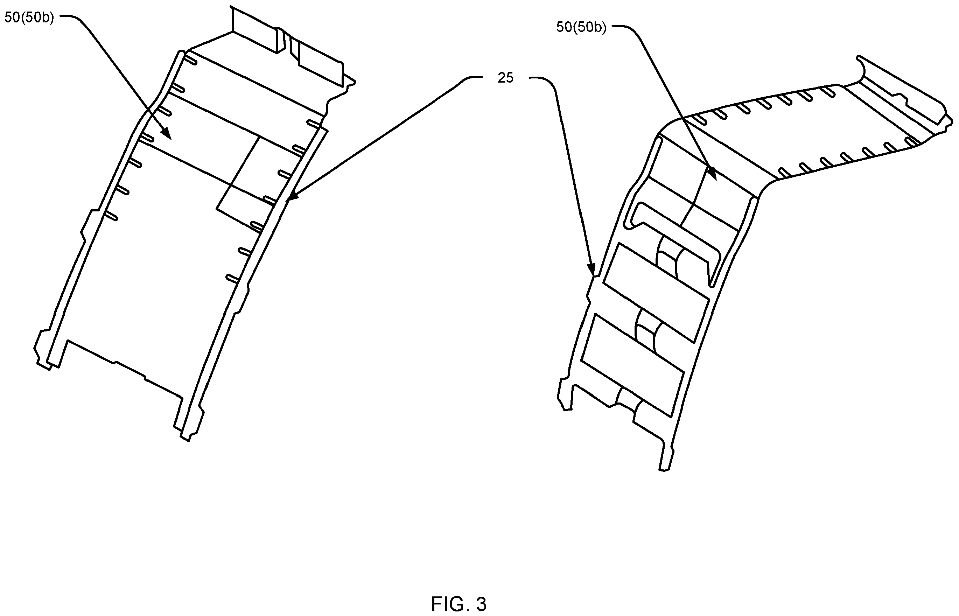

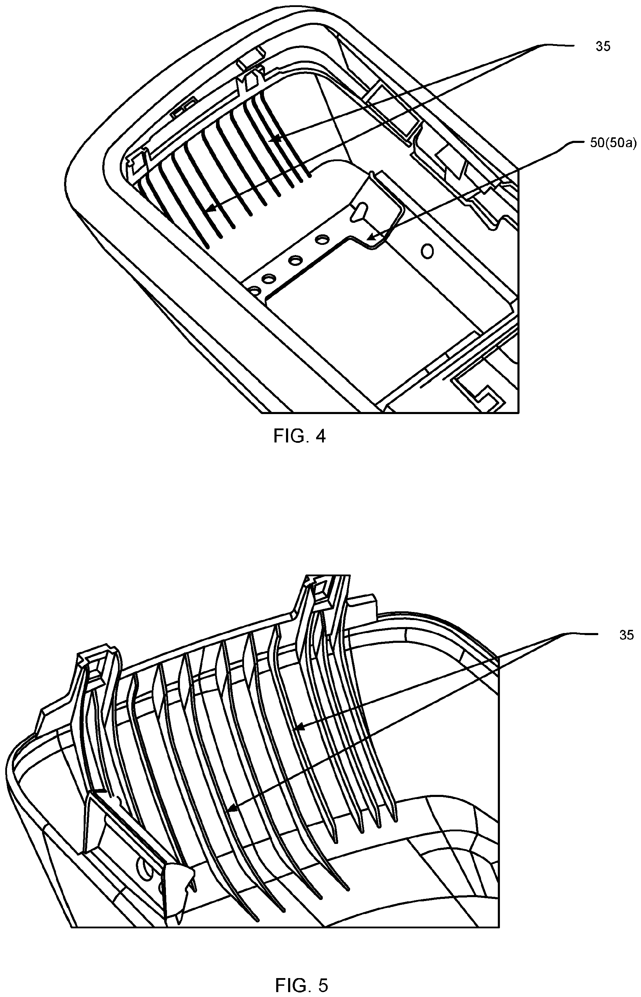

In an embodiment, referring to FIGs. 4 and 5, the inner surface of the second member (30) includes two or more ribs (35) adapted for guiding and bending the second end (50a") of the first bendable cover (50a). More particularly, the two or more ribs (35) are arranged on a curved inner surface of the second member (30) having a thickness gradually increasing from the lower end to the upper end of the curved inner surface of the first member (30). Similarly, in the present embodiment, referring to FIG. 3, the inner surface of the first member (20) includes a rail (25) adapted for guiding and bending the second end (50b") of the second bendable cover (50b).

In the present embodiment, the first member (20) is a housing arranged on a floor of the vehicle that may store articles therein. The second member (30) is a storage box with a lid/armrest (30-1). The console assembly (100) can be arranged in between the front seats (not shown) of the vehicle or beside the driver seat (not shown) of the vehicle.

The bendable cover (50) is made up of a substantially rigid material for example Polyethylene. In a preferred embodiment, the bendable cover (50) is a single strip made up of a substantially rigid material for example Polyethylene. In another embodiment, the bendable cover (50) comprises a live hinge in a central portion of the bending cover for enabling the bending function. This design helps avoid dust accumulation on the bendable cover (50) thus having lower maintenance and also providing assembly freedom and aesthetic appealing. The bendable cover (50) bends upon application of external force and is able to regain its original shape after removal of the external force.

The bendable cover (50) is oriented substantially horizontal when closing the gap between the portion (a, a') of the first member (20) and the portion (b, b') of the second member (30), wherein when the bendable cover (50) bends into the first member (20) or the second member (30) is oriented substantially parallel to the respective inner surface of the first member (20) or the second member (30).

In a second embodiment, referring to FIG. 2, the console assembly (100) includes a first member (200), a second member (300), a bendable cover (500) is shown. The first member (200) and/or second member (300) are slidable with respect to each other and are of substantially same length. The bendable cover (500) is attached to the first member (200) and is arranged to at least partially close a gap (5-1) between a portion (a) of the first member (200) and a portion (b) of the second member (300).

In an embodiment, the bendable cover (50) may have an opening (not shown) or a transparent cover to allow light to pass through to projection lighting on a floor of the vehicle, yet restricting the accumulation of dust inside the console assembly.

Therefore, the present disclosure provides a simple, cost-effective, lightweight, compact, and efficient console assembly with a sliding member which can slide in the desired position(s) as required by a user of the vehicle to cover gaps provided in the console assembly, and which also allows light to pass therethrough as required but restricts entry of dust and other particulates therewithin.

Moreover, in interpreting the specification, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refer to at least one of something selected from the group consisting of A, B, C ....and N, the text should be interpreted as requiring only one element from the group, not A plus N, or B plus N, etc.

While the foregoing describes various embodiments of the invention, other and further embodiments of the invention may be devised without departing from the basic scope thereof. The scope of the invention is determined by the claims that follow. The invention is not limited to the described embodiments, versions or examples, which are included to enable a person having ordinary skill in the art to make and use the invention when combined with information and knowledge available to the person having ordinary skill in the art.

### ADVANTAGES OF THE PRESENT INVENTION

The present invention provides a console assembly where at least a part of the console slides in a desired position as required by a user of a vehicle.

The present invention provides a maintenance free console assembly that avoids dust accumulation.

The present invention provides an easy to operate console assembly.

The present invention provides a console assembly where at least a part of console assembly slides in desired position that operates semi-automatically or fully automatically.

The present invention provides a simple, efficient, and structurally aesthetic appealing console assembly arranged in between the front seat of the vehicle.

## Claims

1. A console assembly (100) for a vehicle comprising:
a first member (20),
a second member (30),
the first member (20) and/or the second member (30) are slidable with respect to each other,
wherein one or more bendable cover (50, 500) is attached to the first member (20) or to the second member (30), and
wherein the one or more bendable cover (50, 500) is arranged to at least partially close one or more gap (5) created between a portion (a, a') of the first member (20) and a portion (b, b') of the second member (30),
wherein
a first end of the bendable cover (50, 500) is fixedly connected to the first member (20) and a second end is adapted to bend into an inner surface of the second member (30) such that at least a portion of the bendable cover (50, 500) is not visible when viewed from outside,
wherein
the bendable cover (50, 500) is oriented substantially horizontal when closing the gap (5) between the portion (a, a') of the first member (20) and the portion (b, b') of the second member (30), and
the bendable cover (50, 500) is oriented substantially parallel to the respective inner surface of the first member (20) or the second member (30) when the bendable cover (50, 500) bends into the first member (20) or the second member (30), **characterized in that** the bendable cover (50, 500) is made up of a substantially rigid material which bends upon application of an external force and regains its original shape after removal of the external force.

2. The console assembly (100) as claimed in claim 1, wherein a set of two bendable covers comprising a first bendable cover (50a), and a second bendable cover (50b) are arranged to at least partially close a first gap (5a) and a second gap (5b), respectively, out of the one or more gap (5) between the portion (a, a') of the first member (20) and the portion (b, b') of the second member (30), respectively.

3. The console assembly (100) as claimed we claim 2, wherein a first end (50b') of the second bendable cover (50b) is fixedly connected to the second member (30) and a second end (50b") is adapted to bend into an inner surface of the first member (20) such that at least a portion of the second bendable cover (50b) is not visible from outside.

4. The console assembly (100) as claimed in claim 2, wherein the inner surface of the second member (30) includes two or more ribs (35) adapted for guiding and bending a second end (50a") of the first bendable cover (50a).

5. The console assembly (100) as claimed in claim 3, wherein the inner surface of the first member (20) includes a rail (25) adapted for guiding and bending the second end (50b") of the second bendable cover (50b).

6. The console assembly (100) as claimed in claim 4, wherein the two or more ribs (35) are arranged on a curved inner surface of the second member (30), wherein a thickness of the two or more ribs (35) gradually increases from the lower end to the upper end of the curved inner surface.

7. The console assembly (100) as claimed in claim 1, wherein the first member (20) is a housing arranged on a floor of the vehicle and the second member (30) is a storage box and/or a lid/armrest.

8. The console assembly (100) as claimed in claim 1, wherein the console assembly (100) is arranged in between front seats of the vehicle.

9. The console assembly (100) as claimed in claim 1, wherein the bendable cover (50, 500) is a single strip made up of Polyethylene.

## Patentansprüche

1. Konsolenbaugruppe (100) für ein Fahrzeug, umfassend:
ein erstes Element (20),
ein zweites Element (30),
wobei das erste Element (20) und/oder das zweite Element (30) in Bezug aufeinander verschiebbar sind,
wobei mindestens eine biegbare Abdeckung (50, 500) an dem ersten Element (20) oder dem zweiten Element (30) angebracht ist, und
wobei die mindestens eine biegbare Abdeckung (50, 500) angeordnet ist, eine oder mehrere Lücken (5), die zwischen einem Teil (a, a') des ersten Elements (20) und einem Teil (b, b') des zweiten Elements (30) entsteht, zumindest zum Teil zu schließen,
wobei ein erstes Ende der biegbaren Abdeckung (50, 500) fest mit dem ersten Element (20) verbunden ist und ein zweites Ende dazu eingerichtet ist, sich in eine Innenfläche des zweiten Elements (30) zu biegen, so dass zumindest ein Teil der biegbaren Abdeckung (50, 500) von außen gesehen nicht sichtbar ist,
wobei die biegbare Abdeckung (50, 500) im Wesentlichen horizontal ausgerichtet ist, wenn sie die Lücke (5) zwischen dem Teil (a, a') des ersten Elements (20) und dem Teil (b, b') des zweiten Elements (30) schließt, und
die biegbare Abdeckung (50, 500) im Wesentlichen parallel zu der jeweiligen Innenfläche des ersten Elements (20) oder des zweiten Elements (30) ausgerichtet ist, wenn die biegbare Abdeckung (50, 500) sich in das erste Element (20) oder das zweite Element (30) biegt,
**dadurch gekennzeichnet, dass** die biegbare Abdeckung (50, 500) aus einem im Wesentlichen steifen Material gefertigt ist, das sich bei Ausübung einer externen Kraft verbiegt und nach Lösen der externen Kraft seine ursprüngliche Form wiedererlangt.

2. Konsolenbaugruppe (100) nach Anspruch 1, wobei ein Satz von zwei biegbaren Abdeckungen, der eine erste biegbare Abdeckung (50a) und eine zweite biegbare Abdeckung (50b) umfasst, angeordnet ist, jeweils eine erste Lücke (5a) und eine zweite Lücke (5b) von der mindestens einen Lücke (5) zwischen dem Teil (a, a') des ersten Elements (20) und dem Teil (b, b') des zweiten Elements (30) jeweils zumindest zum Teil zu schließen.

3. Konsolenbaugruppe (100) nach Anspruch 2, wobei ein erstes Ende (50b') der zweiten biegbaren Abdeckung (50b) fest mit dem zweiten Element (30) verbunden ist und ein zweites Ende (50b") dazu eingerichtet ist, sich in eine Innenfläche des ersten Elements (20) zu biegen, so dass zumindest ein Teil der zweiten biegbaren Abdeckung (50b) von außen gesehen nicht sichtbar ist.

4. Konsolenbaugruppe (100) nach Anspruch 2, wobei die Innenfläche des zweiten Elements (30) zwei oder mehr Rippen (35) einschließt, die zum Führen und Biegen eines zweiten Endes (50a") der ersten biegbaren Abdeckung (50a) ausgelegt sind.

5. Konsolenbaugruppe (100) nach Anspruch 3, wobei die Innenfläche des ersten Elements (20) eine Schiene (25) einschließt, die zum Führen und Biegen eines zweiten Endes (50b") der zweiten biegbaren Abdeckung (50b) eingerichtet ist.

6. Konsolenbaugruppe (100) nach Anspruch 4, wobei die zwei oder mehr Rippen (35) auf einer gekrümmten Innenfläche des zweiten Elements (30) angeordnet sind, wobei eine Dicke der zwei oder mehr Rippen (35) vom unteren Ende zum oberen Ende der gekrümmten Innenfläche allmählich zunimmt.

7. Konsolenbaugruppe (100) nach Anspruch 1, wobei das erste Element (20) ein Gehäuse ist, das an einem Boden des Fahrzeugs angeordnet ist, und das zweite Element (30) eine Aufbewahrungsbox und/oder ein Deckel/eine Armlehne ist.

8. Konsolenbaugruppe (100) nach Anspruch 1, wobei die Konsolenbaugruppe (100) zwischen Vordersitzen des Fahrzeugs angeordnet ist.

9. Konsolenbaugruppe (100) nach Anspruch 1, wobei die biegbare Abdeckung (50, 500) ein einzelner Streifen ist, der aus Polyethylen gefertigt ist.

## Revendications

1. Ensemble de console (100) pour un véhicule, comprenant :
un premier élément (20) ;
un second élément (30) ;
le premier élément (20) et/ou le second élément (30) peuvent coulisser l'un par rapport à l'autre,
dans lequel un ou plusieurs moyens de recouvrement pouvant être fléchis (50, 500) est ou sont lié(s) au premier élément (20) ou au second élément (30), et
dans lequel les un ou plusieurs moyens de recouvrement pouvant être fléchis (50, 500) sont agencés de manière à fermer au moins partiellement un ou plusieurs espaces (5) qui est ou sont créé(s) entre une partie (a, a') du premier élément (20) et une partie (b, b') du second élément (30),
dans lequel une première extrémité du moyen de recouvrement pouvant être fléchi (50, 500) est connectée de façon fixe au premier élément (20) et une seconde extrémité est adaptée pour être fléchie à l'intérieur d'une surface interne du second élément (30) de telle sorte qu'au moins une partie du moyen de recouvrement pouvant être fléchi (50, 500) ne soit pas visible tel que vu depuis l'extérieur, et
dans lequel le moyen de recouvrement pouvant être fléchi (50, 500) est orienté sensiblement à l'horizontale lors de la fermeture de l'espace (5) entre la partie (a, a') du premier élément (20) et la partie (b, b') du second élément (30), et
le moyen de recouvrement pouvant être fléchi (50, 500) est orienté sensiblement parallèlement à la surface interne respective du premier élément (20) ou du second élément (30) lorsque le moyen de recouvrement pouvant être fléchi (50, 500) est fléchi à l'intérieur du premier élément (20) ou du second élément (30),
**caractérisé en ce que** le moyen de recouvrement pouvant être fléchi (50, 500) est réalisé à partir d'un matériau sensiblement rigide qui est fléchi suite à l'application d'une force externe et qui reprend sa forme originale après la suppression de la force externe.

2. Ensemble de console (100) tel que revendiqué selon la revendication 1, dans lequel les moyens de recouvrement d'un ensemble de deux moyens de recouvrement pouvant être fléchis comprenant un premier moyen de recouvrement pouvant être fléchi (50a) et un second moyen de recouvrement pouvant être fléchi (50b) sont respectivement agencés de manière à fermer au moins partiellement un premier espace (5a) et un second espace (5b) parmi les un ou plusieurs espaces (5) respectivement entre la partie (a, a') du premier élément (20) et la partie (b, b') du second élément (30).

3. Ensemble de console (100) tel que revendiqué selon la revendication 2, dans lequel une première extrémité (50b') du second moyen de recouvrement pouvant être fléchi (50b) est connectée de façon fixe au second élément (30) et une seconde extrémité (50b") est adaptée pour être fléchie à l'intérieur d'une surface interne du premier élément (20) de telle sorte qu'au moins une partie du second moyen de recouvrement pouvant être fléchi (50b) ne soit pas visible depuis l'extérieur.

4. Ensemble de console (100) tel que revendiqué selon la revendication 2, dans lequel la surface interne du second élément (30) inclut deux nervures ou plus (35) qui sont adaptées pour guider et fléchir une seconde extrémité (50a") du premier moyen de recouvrement pouvant être fléchi (50a).

5. Ensemble de console (100) tel que revendiqué selon la revendication 3, dans lequel la surface interne du premier élément (20) inclut un rail (25) qui est adapté pour guider et fléchir la seconde extrémité (50b") du second moyen de recouvrement pouvant être fléchi (50b).

6. Ensemble de console (100) tel que revendiqué selon la revendication 4, dans lequel les deux nervures ou plus (35) sont agencées sur une surface interne incurvée du second élément (30), et dans lequel une épaisseur des deux nervures ou plus (35) augmente de façon progressive depuis l'extrémité inférieure jusqu'à l'extrémité supérieure de la surface interne incurvée.

7. Ensemble de console (100) tel que revendiqué selon la revendication 1, dans lequel le premier élément (20) est un logement qui est agencé sur un plancher du véhicule et le second élément (30) est une boîte de rangement et/ou un couvercle/accoudoir.

8. Ensemble de console (100) tel que revendiqué selon la revendication 1, dans lequel l'ensemble de console (100) est agencé entre les sièges avant du véhicule.

9. Ensemble de console (100) tel que revendiqué selon la revendication 1, dans lequel le moyen de recouvrement pouvant être fléchi (50, 500) est une unique bande réalisée à partir de polyéthylène.
